# EUROPÄISCHE PATENTANMELDUNG

(11) **EP 4 467 372 A1**
(43) Veröffentlichungstag der Anmeldung: **27.11.2024**
(21) Anmeldenummer: 23175230.4
(22) Anmeldetag: 25.05.2023
(51) Int. Cl.: B60J 7/043

(54) **ANORDNUNG FÜR EIN FAHRZEUGDACH UND FAHRZEUGDACH FÜR EIN KRAFTFAHRZEUG**

(71) Anmelder: Webasto SE, 82131 Stockdorf (DE)
(72) Erfinder: WALCHER, Kilian, 82131 Stockdorf (DE); POPOVICI, Andrei, 82131 Stockdorf (DE); GERING, Sebastian, 82131 Stockdorf (DE)
(74) Vertreter: Epping - Hermann - Fischer

(57) **Zusammenfassung**

Eine Anordnung (10) für ein Fahrzeugdach (1) umfasst einen Deckel (4), der dazu ausgebildet ist, ein aus- und einstellbares Dachelement für das Fahrzeugdach (1) einzurichten, wobei der Deckel (4) ein Deckelinnenblech (8) zum Koppeln mit einer Dachkarosserie (3) des Kraftfahrzeugs aufweist. Die Anordnung (10) umfasst weiter eine Deckelmechanik, die dazu ausgebildet ist, den Deckel (4) beweglich mit der Dachkarosserie (3) des Kraftfahrzeugs zu koppeln, wobei die Deckelmechanik einen Deckelträger (9) aufweist, der in Abstimmung auf den Deckel (4) ausgebildet ist und sich bezogen auf eine Längsachse (L) des Fahrzeugdachs (1) überwiegend länglich erstreckt. Die Anordnung (10) umfasst ferner ein plattenförmiges Kopplungselement (11), das mittels Befestigungselemente (13, 14) den Deckelträger (9) mit dem Deckelinnenblech (8) koppelt.

## Beschreibung

Die Erfindung betrifft eine Anordnung für ein Fahrzeugdach. Die Erfindung betrifft ferner ein Fahrzeugdach mit einer solchen Anordnung.

Einige Kraftfahrzeuge weisen Fahrzeugdächer mit einem oder mehreren Deckeln auf, die beispielsweise als fest integrierte Glaselemente eine Durchsicht durch das Fahrzeugdach erlauben oder als bewegliche Komponenten ausgebildet sind und wahlweise ein Freigeben und Verschließen einer Öffnung in dem Fahrzeugdach ermöglichen. Bei einem Herstellen eines solchen Fahrzeugdachs werden Dachmodule mittels eines Rahmens mit einer Karosserie des Kraftfahrzeugs verbunden. Ein Ausbilden eines Fahrzeugdachs ist zum Beispiel in dem Dokument EP 2020367 A2 beschrieben. Dabei ist es stets eine Herausforderung, Kosten gering zu halten und einen platzsparenden Aufbau zu ermöglichen.

Es ist eine Aufgabe, die der Erfindung zugrunde liegt, eine Anordnung für ein Fahrzeugdach zu schaffen, die eine einfache und kostengünstige Konstruktion eines Fahrzeugdachs ermöglicht und zudem einen platzsparenden Aufbau ermöglicht. Es ist ferner eine Aufgabe, ein Fahrzeugdach mit einer solchen Anordnung zu schaffen.

Die jeweilige Aufgabe wird durch die Merkmale der jeweiligen unabhängigen Patentansprüche gelöst. Vorteilhafte Weiterbildungen sind in den abhängigen Patentansprüchen angegeben.

Eine erfindungsgemäße Anordnung für ein Fahrzeugdach für ein Kraftfahrzeug weist einen Deckel auf, der dazu ausgebildet ist, ein aus- und einstellbares Dachelement für das Fahrzeugdach einzurichten. Der Deckel umfasst ein Deckelanbindungselement, zum Beispiel in Form eines Deckelinnenblechs, zum Koppeln des Deckels mit einer Dachkarosserie des Kraftfahrzeugs. Die Anordnung umfasst weiter eine Deckelmechanik, die dazu ausgebildet ist, den Deckel beweglich mit der Dachkarosserie des Kraftfahrzeugs zu verbinden. Die Deckelmechanik umfasst unter anderem einen Deckelträger, der in Abstimmung auf den Deckel ausgebildet ist und sich bezogen auf eine Längsachse des Fahrzeugdachs überwiegend länglich erstreckt. Die Anordnung umfasst außerdem ein plattenförmiges Kopplungselement, das mittels zweier Befestigungselemente den Deckelträger mit dem Deckelinnenblech koppelt.

Mittels der beschriebenen Anordnung ist auf einfache und kostengünstige Weise eine Konstruktion eines Fahrzeugdachs realisierbar, welches zudem einen platzsparenden Aufbau ermöglicht. Das Kopplungselement realisiert als separate Komponente eine längliche Unterlegscheibe, die den Einsatz eines einteiligen Deckelträgers erlaubt, sodass vertikal ein besonders flacher Aufbau der Anordnung realisierbar ist.

Im Rahmen dieser Beschreibung beziehen sich Begriffe, wie "oben", "unten", "vorne", "hinten", "rechts", "links", "horizontal" und "vertikal", auf eine betriebsbereite Ausrichtung eines zugehörigen Kraftfahrzeugs, welches ein Fahrzeugdach mit einer Ausgestaltung der Anordnung umfasst. Entsprechend erstreckt sich die Längsachse des Fahrzeugdachs zwischen einer Front und einem Heck des Kraftfahrzeugs und kann auch eine übliche Fahrtrichtung nach vorne repräsentieren.

Gemäß einer Weiterbildung der Anordnung weist der Deckelträger zwei Öffnungen auf und die Befestigungselemente sind als eine Schraube und ein Bolzen oder eine Niete ausgebildet, die sich in eine jeweilige Öffnung des Deckelträgers erstrecken. Das Deckelinnenblech ist demgemäß mittels der Schraube und der Niete zwischen dem Kopplungselement und dem Deckelträger eingespannt. Somit kann auf einfache und zuverlässige Weise das plattenförmige Kopplungselement als Unterlegscheibe mit dem Deckelträger gekoppelt, zum Beispiel vernietet, und mit diesem sowie mit dem Deckelinnenblech fest verschraubt werden. Die Öffnung des Deckelträgers, die für die Aufnahme der Schraube vorgesehen ist, weist demgemäß einen Gewindeabschnitt auf, der ein Einschrauben der Schraube ermöglicht.

Das Deckelinnenblech weist gemäß einer weiteren Weiterbildung entsprechend eine Durchgangsöffnung für die Schraube auf, die insbesondere auf eine Montage und ein Zusammenwirken der Komponenten abgestimmt ausgebildet und vorgegeben begrenzt ist und durch die sich die Schraube erstreckt. Das Kopplungselement ist im Bereich der Durchgangsöffnung des Deckelinnenblechs größer ausgebildet als entsprechende Abmessungen dieser Durchgangsöffnung.

Gemäß einer weiteren Weiterbildung der Anordnung ist die Durchgangsöffnung des Deckelinnenblechs bezogen auf die Längsachse einem vorderen Endabschnitt des Kopplungselements zugeordnet und rechteckig begrenzt und so ausgebildet, dass sie einen vorgegebenen Einstellbereich für das Deckelinnenblech relativ zu der Schraube bzw. relativ zu dem Deckelträger von ± 2 mm entlang der Längsachse und senkrecht bzw. vertikal dazu bereitstellt.

Die rechteckige Durchgangsöffnung stellt einen Montagespielraum bereit, um den Deckel zuverlässig ausrichten und mit der Dachkarosserie bzw. der dort gelagerten Deckelmechanik verbinden zu können. Der Einstellbereich ermöglicht das Positionieren des Deckels, sodass ein bündiger oder konturfortführender Übergang zwischen einer Deckeloberseite und einer angrenzenden Dachhaut des Kraftfahrzeugs einrichtbar ist. Zudem kann der Deckel im Hinblick auf einen sauberen oder widerstandsarmen Luftstrom hin eingerichtet werden, welcher während einer Fahrt mit dem Kraftfahrzeug am Fahrzeugdach entlang verläuft.

Die rechteckige Durchgangsöffnung hat zum Beispiel eine quadratische Form bzw. ist von dem Deckelinnenblech quadratisch begrenzt und weist eine Kantenlänge von 12 mm auf. Das Kopplungselement weist als breitere Unterlegscheibe eine Schraubenöffnung auf, die auf den Schaft und auf den Kopf der Schraube abgestimmt ausgebildet. Die Schraubenöffnung ist entsprechend groß genug, dass der Schraubenschaft durchgeführt werden kann, und entsprechend klein genug, dass der Schraubenkopf nicht durchgeführt werden kann. Zum Beispiel ist das Kopplungselement in dem Bereich der quadratischen Durchgangsöffnung mit einer Breite und/oder einem Radius von 15 mm ausgebildet. Somit wird die Durchgangsöffnung zuverlässig durch das Kopplungselement bedeckt und die durchgreifende Schraube verrutscht nicht unerwünscht innerhalb der Durchgangsöffnung des Deckelinnenblechs.

Gemäß einer bevorzugten Weiterbildung der Anordnung ist das Kopplungselement als separates, streifenförmiges Metallblech ausgebildet und mittels der Befestigungselemente mit dem Deckelträger verschraubt und/oder vernietet. Das Kopplungselement und der Deckelträger sind als zwei separate Komponenten ausgebildet. Das Kopplungselement realisiert insbesondere ein Klemmblech, das auf einfache und zuverlässige Weise montiert werden kann und eine sichere Anbindung des Deckels an der Deckelmechanik ermöglicht. Das Kopplungselement ist überwiegend länglich und platten- bzw. streifenförmig, sodass eine Dicke oder Stärke des Kopplungselements deutlich geringer ausgeführt ist als eine Länge und eine Höhe oder Breite.

Das Kopplungselement ist kostengünstig herstellbar und ermöglicht das Ausbilden oder den Einsatz eines einteiligen Deckelträgers, der insbesondere im Hinblick auf relativ große und/oder schwere Deckel nutzbringend ist. Der Deckelträger ist insbesondere so ausgebildet, dass er sich in Richtung der Längsachse mindestens über eine halbe Länge des zu stützenden Deckels erstreckt. Der einteilige Deckelträger kann zum Beispiel so eingerichtet sein, dass er eine Länge entlang der Längsachse aufweist, die 60-90% der Länge des Deckels beträgt. Der durchgehende, einteilige Deckelträger stellt ferner auch für nicht so steif ausgeführte Deckelsysteme eine zuverlässige Abstützung bereit.

Gemäß einer weiteren Weiterbildung der Anordnung umfasst das Kopplungselement bezogen auf die Längsachse an einem hinteren Endabschnitt zwei Sicherungselemente, die an gegenüberliegenden Seiten den Deckelträger umgreifen und eine Verdrehsicherung des Kopplungselements relativ zu dem Deckelträger einrichten. Die Sicherungselemente sind zum

Beispiel als umgebogene Laschen einstückig mit dem Kopplungselement ausgebildet und tragen zu einem sicheren und stabilen Aufbau der Anordnung bei. Das Kopplungselement kann somit als Unterlegscheibe zur Abdeckung der Durchgangsöffnung im Haltewinkel bzw. im Deckelinnenblech verdreh- und verliersicher am Deckelträger befestigt werden.

Gemäß einer weiteren Weiterbildung umfasst die Anordnung ein weiteres plattenförmiges Kopplungselement, das beabstandet zu dem zuvor beschriebenen Kopplungselement angeordnet und mittels weiterer Befestigungselemente den Deckelträger mit dem Deckelinnenblech koppelt. Bevorzugt ist ein Kopplungselement in einem vorderen und das andere Kopplungselement in einem hinteren Bereich des Deckels mit dem Deckträger verbunden, um eine nutzbringende und zuverlässige Anbindung und Abstützung für den Deckel einzurichten.

Ein erfindungsgemäßes Fahrzeugdach für ein Kraftfahrzeug umfasst eine Dachkarosserie, eine Führungsschiene mit einem Führungskanal, die mit der Dachkarosserie gekoppelt ist, und eine Ausführungsform der zuvor beschriebenen Anordnung. Ferner ist die Anordnung mittels der Führungsschiene mit der Dachkarosserie gekoppelt, sodass der Deckelträger verfahrbar in dem Führungskanal der Führungsschiene gelagert ist.

Dadurch, dass das Deckelsystem und das Fahrzeugdach eine Ausführungsform der Anordnung umfasst, sind Merkmale und Eigenschaften der zuvor beschriebenen Anordnung auch für das Deckelsystem und das Fahrzeugdach offenbart und umgekehrt. Darüber hinaus wird darauf hingewiesen, dass jeweils auf gegenüberliegenden Seiten des Fahrzeugdachs bezogen auf die Längsachse jeweils eine Ausführung der zuvor beschriebenen Anordnung verbaut ist, sodass die jeweiligen Komponenten in Bezug auf eine mittige Symmetrieachse spiegelsymmetrisch angeordnet und/oder ausgebildet sind. Der Deckel ist nachvollziehbar einfach vorhanden und umfasst zum Beispiel eine Glasscheibe oder ein Verbundglas mit einer Umschäumung, in die das Deckelinnenblech teilweise eingebettet ist.

Es ist eine Erkenntnis im Zusammenhang mit der vorliegenden Erfindung, dass konventionelle Dachsysteme den Einsatz von zwei oder mehrteiligen Deckelträgern, insbesondere im Hinblick auf relativ große oder schwere Deckel, erfordern. Demgemäß wird ein entsprechender Bauraum benötigt und zudem erfordert dies eine entsprechende Anbindung des Deckels an einer Dachkarosserie.

Mittels der beschriebenen Anordnung kann ein Aufbau übersichtlich gestaltet und flacher realisiert werden, sodass aufgrund des separaten Kopplungsblechs und des einteiligen Deckelträgers ein vertikaler Bauraum um mehrere Millimeter, beispielsweise 3-5 mm, reduziert werden kann. Insbesondere ist die Anordnung als symmetrische Ausführung für beidseitige Anwendungen realisierbar und potenziell als Gleichteil über verschiedene Aufbauten hinweg für Fahrzeugdächer realisierbar. Die Anordnung bzw. die Verbindung eines jeweiligen Kopplungselements ist an Schraubpunkten vorne und/oder mittig und/oder hinten am Deckelträger realisierbar. Bevorzugt sind jeweils mindestens zwei plattenförmige Kopplungsbleche als Unterlegscheiben pro Deckelträger und/oder pro Fahrzeugseite vorgesehen.

Ausführungsbeispiele der Erfindung sind im Folgenden anhand der schematischen Zeichnungen näher erläutert. Es zeigen:
- Figur 1: ein Fahrzeugdach für ein Kraftfahrzeug in einer perspektivischen Ansicht,
- Figur 2: ein Ausführungsbeispiel einer Anordnung für das Fahrzeugdach in einer Schnittdarstellung,
- Figuren 3-4: ein Ausführungsbeispiel der Anordnung für das Fahrzeugdach in verschiedenen perspektivischen Ansichten.

Elemente gleicher Konstruktion oder Funktion sind figurenübergreifend mit den gleichen Bezugszeichen gekennzeichnet. Aus Gründen der Übersichtlichkeit sind gegebenenfalls nicht alle dargestellten Elemente in sämtlichen Figuren mit zugehörigen Bezugszeichen gekennzeichnet.

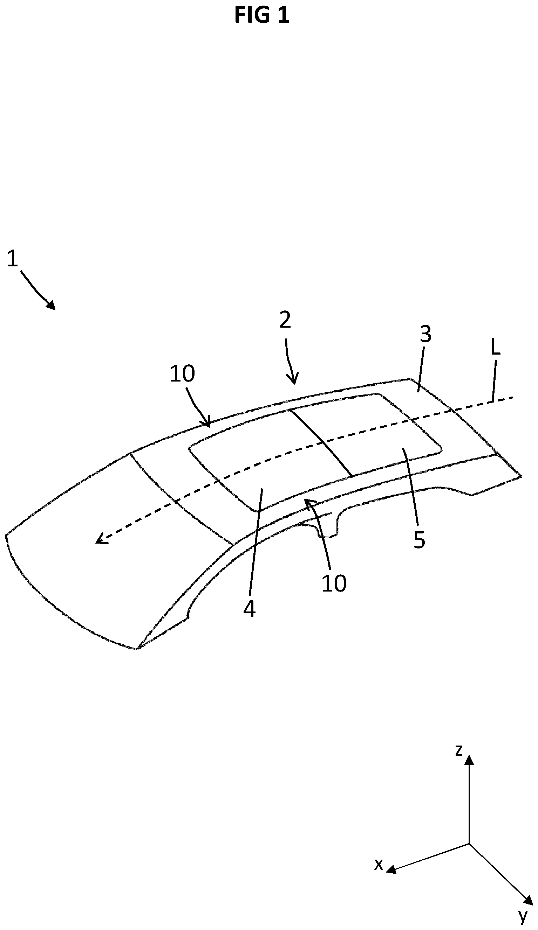

Figur 1 zeigt in einer perspektivischen Ansicht schematisch ein Fahrzeugdach 1 für ein Kraftfahrzeug. Das Fahrzeugdach 1 umfasst ein Deckelsystem 2, das mit einer Dachkarosserie 3 des Kraftfahrzeugs gekoppelt ist. Das Deckelsystem 2 umfasst einen ersten, vorderen Deckel 4 und einen zweiten, hinteren Deckel 5 bezogen auf eine Längsachse L des Fahrzeugdachs 1. Die Längsachse L repräsentiert auch eine Längsachse des Deckelsystems 2 bzw. der Deckel 4 und 4 sowie des Kraftfahrzeugs und stellt zudem gemäß der illustrierten Pfeilrichtung eine übliche Fahrtrichtung des betriebsbereiten Kraftfahrzeugs dar.

Begriffe, wie "oben", "unten", "vorne", "hinten", "rechts", "links", "horizontal" und "vertikal", beziehen sich auf eine Ausrichtung der jeweiligen Komponente gemäß einer betriebsbereiten Ausgestaltung des Fahrzeugdachs 1 an einem Kraftfahrzeug, wie es in Figur 1 angedeutet ist. In der folgenden Beschreibung wird überwiegend auf den vorderen Deckel 4 eingegangen, der ein aus- und einstellbares Dachelement für das Fahrzeugdach 1 einrichtet. Die nachfolgend beschriebenen Eigenschaften und Merkmale können aber auch auf den hinteren Deckel 5 übertragen werden. Alternativ kann das Fahrzeugdach 1 auch nur einen Deckel 4 aufweisen.

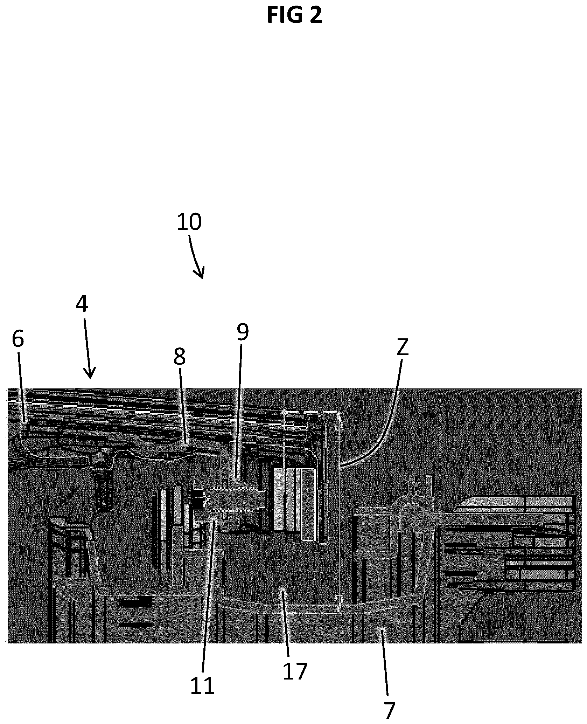

Der Deckel 4 ist mittels eines Deckelrahmens 6 mit der Dachkarosserie 3 des Kraftfahrzeugs gekoppelt. Der Deckelrahmen 6 umfasst insbesondere eine Umschäumung, in der ein Deckelinnenblech 8 teilweise eingeschäumt ist (s. Figur 2). Das Deckelinnenblech 8 ermöglicht die Anbindung des Deckels 4 an die Dachkarosserie 3 des Fahrzeugdachs 1 bzw. des Kraftfahrzeugs. Wie anhand der nachfolgenden Figuren erläutert wird, ermöglicht eine Anordnung 10 mit dem Deckel 4 eine einfache und kostengünstige Konstruktion des Fahrzeugdachs 1 und erlaubt zudem einen besonders platzsparenden Aufbau. In der folgenden Beschreibung wird ferner auf eine Seite des Fahrzeugdachs 1 eingegangen. Es ist aber eine entsprechende Ausbildung auf der anderen Seite des Fahrzeugdachs 1 vorzusehen, sodass Komponenten der Anordnung 10 in Bezug auf die Längsachse L spiegelsymmetrisch angeordnet und/oder ausgebildet sind.

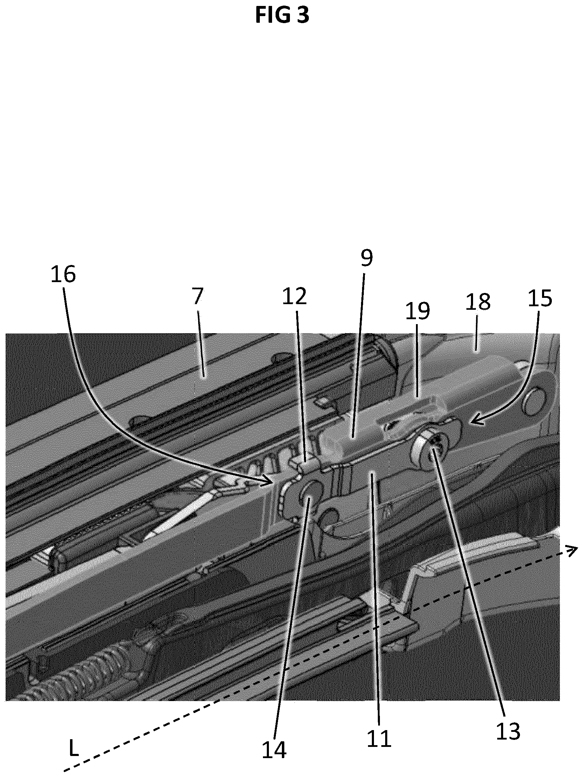

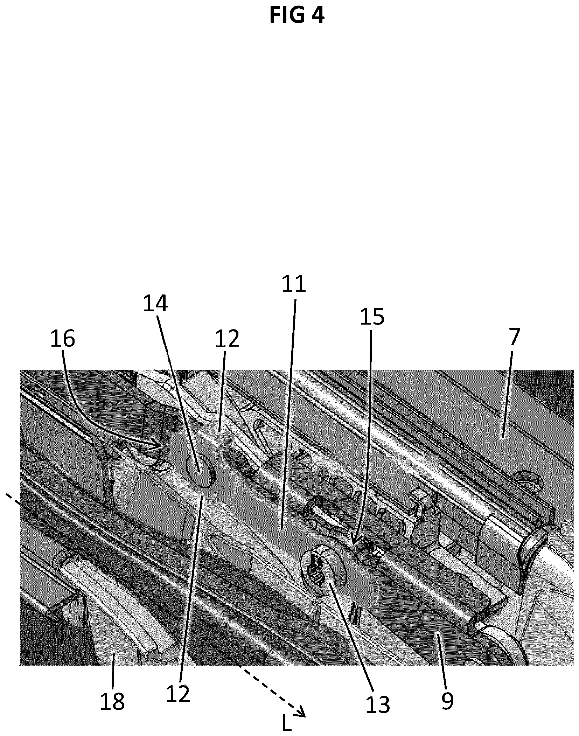

Die Anordnung 10 umfasst eine Deckelmechanik, die dazu ausgebildet ist, den Deckel 4 beweglich mit der Dachkarosserie 3 des Kraftfahrzeugs zu koppeln. Die Deckelmechanik weist einen Deckelträger 9 auf, der in Abstimmung auf den Deckel 4 ausgebildet ist und sich bezogen auf die Längsachse L überwiegend länglich erstreckt (s. Figuren 3 und 4). Die Anordnung 10 weist ferner ein plattenförmiges Kopplungselement 11 auf, das in Form einer separaten Unterlegscheibe ausgebildet ist und im Zusammenwirken mit einer Schraube 13 und einer Niete 14 den Deckelträger 9 mit dem Deckelinnenblech 8 koppelt.

Aufgrund des beschriebenen Aufbaus der Anordnung 10 mit dem Kopplungselement 11 kann der Deckelträger 9 einteilig und länglich ausgeführt werden und insbesondere in Bezug auf einen relativ großen und/oder schweren und/oder nicht so steifen Deckel 4 vorgesehen werden. Der Deckelträger 9 und das Kopplungselement 11 ermöglichen einen besonders flachen Aufbau der Anordnung 10 auszubilden, sodass ein benötigter Bauraum Z in vertikaler Richtung gering gehalten werden kann (s. Figur 2). Im Vergleich zu konventionellen Dachsystemen kann somit ein benötigter Bauraum in z-Richtung um 5 mm oder mehr reduziert werden. Entsprechend vorteilhaft wirkt sich das auf eine Kopffreiheit für Fahrzeuginsassen sowie ein Raumempfinden in dem Kraftfahrzeug aus.

Die Figuren 3 und 4 zeigen in einer jeweiligen perspektivischen Ansicht eine Ausgestaltung des Kopplungselements 11, das mit dem Deckelträger 9 mittels der Niete 14 und der Schraube 13 verbunden ist. Der Deckel 4 sowie das Deckelinnenblech 8 sind aus perspektivischen Gründen ausgeblendet. Das Deckelinnenblech 8 ist zwischen dem Kopplungselement 11 und dem Deckelträger 9 angeordnet und mittels der Niete 14 und der Schraube 13 zuverlässig eingespannt. Die Figuren 3 und 4 illustrieren zum Beispiel eine Detailansicht einer Position des Fahrzeugdachs 1 vorne links mit einer Blickrichtung von schräg oben.

Das Fahrzeugdach 1 umfasst ferner eine Führungsschiene 7 mit einem Führungskanal 17. Die Führungsschiene 7 erstreckt sich überwiegend an einer zugeordneten Seite des Fahrzeugdachs 1 entlang der Längsachse L und ist mit der Dachkarosserie 3 und oder einem Rahmenteil 18 gekoppelt, das mit der Dachkarosserie 3 verbunden ist. Der Deckelträger 9 der Anordnung 10 ist innerhalb des Führungskanals 17 der Führungsschiene 7 verfahrbar gelagert. Zusätzlich zu dem Deckelträger 9 sind in der Regel weitere Komponenten der Deckelmechanik in oder an der Führungsschiene 7 vorgesehen, die sich gegebenenfalls den Führungskanals 17 teilen und/oder in weiteren Führungskanälen der Führungsschiene 7 angeordnet sind.

Der Deckelträger 9 kann, wie in Figur 3 dargestellt, eine Trägerversteifung 19 aufweisen, die zum Beispiel als umgebogener Abschnitt einteilig mit dem Deckelträger 9 ausgestaltet ist. Alternativ kann eine solche Versteifung auch nicht vorgesehen sein, wie in Figur 4 gezeigt ist. Der Deckelträger 9 erstreckt sich zum Beispiel mindestens über die halbe Länge des zugeordneten Deckels 4. Der Deckelträger 9 hat zum Beispiel eine Länge zwischen 500-750 mm. Der Deckelträger 9 kann zum Beispiel eine Länge von 620 mm aufweisen.

Das Kopplungselement 11 ist zum Beispiel als streifenförmiges Metallblech ausgestaltet und realisiert als Unterlegscheibe einen einfachen Zusammenbau und einen zuverlässigen Halt der zusammenwirkenden Komponenten der Anordnung 10 miteinander. Das Kopplungselement 11 ist mittels der Niete 14 und/oder der Schraube 13 an dem Deckelträger 9 befestigt und klemmt das dazwischenliegende Deckelinnenblech 8 sicher und stabil ein. Das Kopplungselement 11 kann optional, wie in den Figuren 3 und 4 gezeigt, Sicherungselemente 12 aufweisen, die bezogen auf die Längsachse L an einem hinteren Endabschnitt 16 des Kopplungselements 11 ausgebildet sind und die an gegenüberliegenden Seiten den Deckelträger 9, wie Klammern, umgreifen. Die Sicherungselemente 12 sind als umgebogene Laschen einstückig mit dem Kopplungselement 11 ausgebildet und richten eine besonders zuverlässige Verdrehsicherung des Kopplungselements 11 relativ zu dem Deckelträger 9 ein. Sofern solche Umklammerungen vorgesehen sind, ist das Deckelblech 8 entsprechend auszubilden, sodass dieses zum Beispiel bis in dem Kopplungsbereich L-förmig ausgeführt ist bzw. sich ein Abschnitt nach unten erstreckt und im Bereich der Schraube 13 zwischen dem Kopplungselement 11 und dem Deckelträger 9 eingespannt ist.

Der Deckelträger 9 weist für die Befestigungselemente entsprechende Öffnungen auf, in die die Niete 14 und die Schraube 13 eingebracht sind, sodass das Deckelinnenblech 8 mittels der Befestigungselemente zwischen dem Kopplungselement 11 und dem Deckelträger 9 eingespannt ist. Im Bereich der Schraube 13 weist der Deckelträger 9 einen Gewindeabschnitt in der zugehörigen Öffnung auf, sodass die Schraube 13 eingeschraubt werden kann. Das Deckelinnenblech 8 umfasst demgemäß zumindest eine Durchgangsöffnung, durch die sich die Schraube 13 erstreckt.

Die Durchgangsöffnung des Deckelinnenblechs 8 ist durch dieses vorgegeben begrenzt und ist zum Beispiel als eine rechteckige Ausnehmung ausgebildet, welche einen vorgegebenen Positionierungsspielraum für eine Montage des Deckels 4 an der Deckelmechanik mit sich bringt. Die Durchgangsöffnung ist zum Beispiel so ausgebildet, dass ein horizontaler (in x-Richtung) und ein vertikaler (in z-Richtung) Einstellbereich von zum Beispiel ± 2 mm gegeben sind.

Das Kopplungselement 11 ist im Bereich der Durchgangsöffnung des Deckelinnenblechs 8 größer ausgebildet ist als entsprechende Abmessungen der rechteckigen Durchgangsöffnung. Zum Beispiel ist die Durchgangsöffnung mit einer Länge und Höhe von jeweils 10 mm quadratisch ausgebildet. Die Schraube 13 ist in einem vorderen Endabschnitt 15 des Kopplungselements 11 vorgesehen und bildet insbesondere ein Standardbauteil zur Befestigung im Fahrzeugdachbereich. Die Schraube 13 weist zum Beispiel einen Durchmesser von 10 mm an dem Schraubenkopf auf. Ein Durchgang für den Schraubenschaft der Schraube 13 durch das Kopplungselement 11 ist kleiner ausgebildet als der Durchmesser des Schraubenkopfes. Das Kopplungselement 11 ist im Bereich der Schraube 13 größer ausgebildet als die darunter befindliche Durchgangsöffnung des Deckelinnenblechs 8. In Bezug auf die angegebenen Beispielwerte weist das Kopplungselement 11 im Bereich der Schraube 13 zum Beispiel eine Höhe von 12 oder 15 Millimeter auf. Das Kopplungselement 11 weist zum Beispiel eine Dicke von 1-2 mm, beispielsweise 1,5 mm auf.

Somit kann die mit montagespiel-behaftete Durchgangsöffnung des Deckelinnenblechs 8 mittels des Kopplungselements 11 in Form einer länglichen Unterlegscheibe zuverlässig abgedeckt werden, sodass die Schraube 13 nicht unerwünscht im Bereich der Durchgangsöffnung verrutscht. Die Anordnung 10 ermöglicht dadurch eine übersichtliche und zuverlässige Konstruktion des Fahrzeugdachs 1 mit besonders platzsparenden Aufbau.

### Bezugszeichenliste

- 1: Fahrzeugdach
- 2: Deckelsystem
- 3: Dachhaut / Dachkarosserie
- 4: vorderer Deckel
- 5: hinterer Deckel
- 6: Deckelrahmen
- 7: Führungsschiene
- 8: Deckelinnenblech
- 9: Deckelträger
- 10: Anordnung
- 11: Kopplungselement
- 12: Sicherungselement
- 13: Schraube
- 14: Bolzen / Niete
- 15: vorderer Endabschnitt des Kopplungselements
- 16: hinterer Endabschnitt des Kopplungselements
- 17: Führungskanal der Führungsschiene
- 18: Rahmenteil
- 19: Trägerversteifung

- L: Längsachse des Fahrzeugdachs
- Z: benötigter Bauraum in vertikaler Richtung

## Patentansprüche

1. Anordnung (10) für ein Fahrzeugdach (1) für ein Kraftfahrzeug, aufweisend:
- einen Deckel (4), der dazu ausgebildet ist, ein aus- und einstellbares Dachelement für das Fahrzeugdach (1) einzurichten, wobei der Deckel (4) ein Deckelinnenblech (8) zum Koppeln des Deckels (4) mit einer Dachkarosserie (3) des Kraftfahrzeugs umfasst,
- eine Deckelmechanik, die dazu ausgebildet ist, den Deckel (4) beweglich mit der Dachkarosserie (3) des Kraftfahrzeugs zu koppeln, wobei die Deckelmechanik einen Deckelträger (9) umfasst, der in Abstimmung auf den Deckel (4) ausgebildet ist und sich bezogen auf eine Längsachse (L) des Fahrzeugdachs (1) überwiegend länglich erstreckt, und
- ein plattenförmiges Kopplungselement (11), das mittels Befestigungselemente (13, 14) den Deckelträger (9) mit dem Deckelinnenblech (8) koppelt.

2. Anordnung (10) nach Anspruch 1, bei der der Deckelträger (9) zwei Öffnungen aufweist und die Befestigungselemente eine Schraube (13) und einen Bolzen (14) umfassen, die sich in eine jeweilige Öffnung des Deckelträgers (9) erstrecken, sodass das Deckelinnenblech (8) mittels der Befestigungselemente zwischen dem Kopplungselement (11) und dem Deckelträger (9) eingespannt ist.

3. Anordnung (10) nach Anspruch 2, bei der das Deckelinnenblech (8) eine Durchgangsöffnung aufweist, die vorgegeben begrenzt ist und durch die sich die Schraube (13) erstreckt, wobei das Kopplungselement (11) im Bereich der Durchgangsöffnung des Deckelinnenblechs (8) größer ausgebildet ist als entsprechende Abmessungen dieser Durchgangsöffnung.

4. Anordnung (10) nach Anspruch 3, bei der die Durchgangsöffnung des Deckelinnenblechs (8) bezogen auf die Längsachse (L) einem vorderen Endabschnitt (15) des Kopplungselements (11) zugeordnet und rechteckig begrenzt ist und einen vorgegebenen Einstellbereich für das Deckelinnenblech (8) relativ zu der Schraube (13) von ± 2 mm entlang der Längsachse (L) und senkrecht dazu bereitstellt.

5. Anordnung (10) nach einem der vorhergehenden Ansprüche, bei der der Deckelträger (9) einteilig ausgebildet ist und sich über mindestens eine halbe Länge des Deckels (4) in Richtung der Längsachse (L) erstreckt.

6. Anordnung (10) nach einem der vorhergehenden Ansprüche, bei der das Kopplungselement (11) als separates, streifenförmiges Metallblech ausgebildet und mittels der Befestigungselemente (13, 14) mit dem Deckelträger (9) verschraubt und/oder vernietet ist.

7. Anordnung (10) nach einem der vorhergehenden Ansprüche, bei der das Kopplungselement (11) bezogen auf die Längsachse (L) an einem hinteren Endabschnitt (16) zwei Sicherungselemente (12) umfasst, die an gegenüberliegenden Seiten den Deckelträger (9) umgreifen und eine Verdrehsicherung des Kopplungselements (11) relativ zu dem Deckelträger (9) einrichten.

8. Anordnung (10) nach Anspruch 7, bei der die Sicherungselemente (12) als umgebogene Laschen einstückig mit dem Kopplungselement (11) ausgebildet sind.

9. Anordnung (10) nach einem der vorhergehenden Ansprüche, aufweisend:
ein weiteres plattenförmiges Kopplungselement, das beabstandet zu dem Kopplungselement (11) angeordnet und
mittels weiterer Befestigungselemente den Deckelträger (9) mit dem Deckelinnenblech (8) koppelt.

10. Fahrzeugdach (1) für ein Kraftfahrzeug, umfassend:
- eine Dachkarosserie (3),
- eine Führungsschiene (7) mit einem Führungskanal (17), die mit der Dachkarosserie (3) gekoppelt ist, und
- eine Anordnung (10) nach einem der vorhergehenden Ansprüche, die mittels der Führungsschiene (7) mit der Dachkarosserie (3) gekoppelt ist, sodass der Deckelträger (9) verfahrbar in dem Führungskanal (17) der Führungsschiene (7) gelagert ist.
